# EUROPEAN PATENT APPLICATION

(11) **EP 0 636 663 A2**
(43) Date of publication of application: **01.02.1995**
(21) Application number: 94111722.8
(22) Date of filing: 27.07.1994
(51) Int. Cl.: C08L 83/07, C08L 27/12

(54) **Blends of fluoroorganic and organosiloxane rubbers**

(30) Priority: 28.07.1993 JP 205644/93
(71) Applicant: Dow Corning Toray Silicone Company, Limited, Tokyo 103 (JP)
(72) Inventor: Kobayashi, Hideki, Dow Corning Toray, Ichihara-shi, Chiba Prefecture (JP)
(74) Representative: Spott, Gottfried, Dr.

(57) **Abstract**

The curable compositions of this invention comprise a blend of an organic fluorinated rubber, a non-fluorinated diorganopolysiloxane gum and a fluorosilicone oil containing silicon-bonded perfluoroalkylethyl radicals wherein the perfluoroalkyl portion of the radicals contain at least 4 carbon atom. These compositions are characterized by an excellent compatibility between the organic rubber and the diorganopolysiloxane gum, and yield cured elastomers with excellent physical properties.

## Description

The present invention relates to blends of a fluorinated organic rubber and an organosiloxane rubber.

Organic fluorinated rubbers exhibit excellent heat resistance, oil resistance, weather resistance, and mechanical strength, making them useful in those fields where such properties are critical. A disadvantage of these rubbers is their poor, low-temperature flexibility. To overcome this problem, fluorinated organic rubbers, also referred to as fluororubbers, have been blended with organosiloxane rubbers, also referred to as silicone rubbers, which exhibit excellent low-temperature properties.

The inherently poor compatibility between fluororubber and silicone rubber makes it extremely difficult to mix these two rubbers into a homogeneous mixture. In addition, the processability of the resulting mixture is very poor.

Numerous methods have been proposed for preparing homogeneous fluororubber/silicone rubber mixtures. For example, JP-A 49-81444 [81,444/1974] teaches addition of acid acceptors such as magnesium oxide during blending of fluororubbers with silicone rubbers. However, the magnesium oxide can induce depolymerization of the silicone rubber, and prevent the final cured rubber molding from exhibiting good physical properties.

JP-A 4-180930 [180,930/1992] discloses blending of fluororubbers with silicone rubbers in the presence of a diorganopolysiloxane containing at both terminal positions the I(CF₂)ₘCONHC₃H₆- group wherein m is an integer with a value of zero to 4. This ingredient improves the compatibility between the two types of rubbers. The disadvantage of this approach is its cost, because synthesis of diorganopolysiloxane is extremely difficult. Another disadvantage is the reduced heat stability of the final cured rubber molding.

As a result of extensive research, we have found that the addition of a particular class of fluorosilicone oils will compatibilize an organic fluororubber with a gum type silicone rubber, thereby producing a homogeneous, cured rubber molding with excellent physical properties is thereby produced.

Suitable fluorosilicone oil comprise liquid polyorganosiloxane wherein each of the silicon atoms is bonded to a perfluoroalkylethyl radical containing at least four fluorinated carbon atoms. Such oils provide excellent compatibility between organic fluororubbers and high consistency polyorganosiloxanes.

The present invention provides a blended rubber composition comprising:
(A) 100 weight parts of a fluorine-containing organic rubber;
(B) from 2 to 200 weight parts of a diorganopolysiloxane gum with the average unit formula

   RₐSiO_{(4-a)/2} ,

   wherein R is selected from substituted or unsubstituted monovalent hydrocarbon radicals and the value of a is from 1.980 to 2.001;
(C) from 0.01 to 40 weight parts of a fluorosilicone oil comprising at least one siloxane unit of the average formula

   F(CF₂)_{b}CH₂CH₂MeₙSiO_{(3-n)/2} ,

   wherein b is an integer with a value of at least 4; n is zero, 1, or 2, and Me represents a methyl radical;
(D) from 1 to 100 weight parts of a finely divided silica; and
(E) an amount of a curing agent sufficient to cure said composition.

The fluorinated organic elastomer, a fluororubber used as ingredient A, comprises at least one of the known fluorine-containing rubbery elastomers, and preferably an organoperoxide-vulcanizable fluororubber. Suitable fluororubbers include vinylidene fluoride homopolymers, vinylidene fluoride-tetrafluoroethylene copolymers, vinylidene fluoride-hexafluoropropylene ter-polymers, vinylidene fluoride-tetrafluoroethylene-hexafluoropropylene copolymers, tetrafluoroethylene-propylene copolymers, and tetrafluoroethylene-perfluoroalkyl vinyl ether copolymers.

The diorganopolysiloxane gum, ingredient B, has the average formula I,

I RₐSiO_{(4-a)/2} .

In this formula R represents a substituted or unsubstituted monovalent hydrocarbon radical and the value of a is from 1.980 to 2.001. Examples of suitable hydrocarbon radicals include alkyl radicals such as methyl and ethyl, alkenyl radicals such as vinyl, allyl, and hexenyl, and aryl radicals such as phenyl. From 0.02 to 10 percent of the radicals represented by R are preferably alkenyl radicals such as vinyl, allyl, or hexenyl.

The terminal siloxane units of ingredient B include dimethylvinylsiloxy, trimethylsiloxy, methylvinylphenylsiloxy, and silanol.

The degree of polymerization of ingredient B is typically in the range from 1,000 to 20,000. This ingredient is exemplified by dimethylvinylsiloxy-endblocked dimethylpolysiloxane gums, dimethylvinylsiloxy-endblocked dimethylsiloxane-methylvinylsiloxane copolymer gums, trimethylsiloxy-endblocked dimethylsiloxane-methylvinylsiloxane copolymer gums, trimethylsiloxy-endblocked dimethylsiloxane- allylmethylsiloxane copolymer gums, and trimethylsiloxy-endblocked dimethylsiloxane-hexenylmethylsiloxane copolymer gums.

The concentration of ingredient B is typically from 2 to 200 weight parts per 100 weight parts of ingredient A, and preferably is from 5 to 150 weight parts.

The liquid fluorinated organopolysiloxane, a fluorinated silicone oil, is specified as ingredient C. This ingredient enhances the compatibility between ingredients A and B during blending of these ingredients.

Ingredient C comprises at least one unit per molecule corresponding to formula II,

II F(CF₂)_{b}CH₂CH₂MeₙSiO_{(3-n)/2} .

The subscript b in formula II represents an integer with a value of at least 4 and may have more than a single value for any given organopolysiloxane. The subscript n in formula II is zero, 1, or 2, and Me represents a methyl radical.

Ingredient C can be a homopolymer or copolymer. When it is a copolymer it can be a random or a block copolymer. When ingredient C is a copolymer and also includes siloxane units, the organic groups bonded to the silicon atoms of these additional units are unsubstituted or substituted monovalent hydrocarbon radicals that include alkyl radicals such as methyl, ethyl and propyl, with methyl being preferred.

Ingredient C can have a straight-chain, branched chain or a cyclic molecular structure, and its viscosity at 25° C is preferably from 10 to 10,000 centipoise (0.01 to 10 Pa.s).

Ingredient C is exemplified by fluorodecyl-terminated dimethylpolysiloxanes with general formula II(a),

II(a) F(CF₂)₈C₂H₄Me₂SiO(Me₂SiO)_{w}SiMe₂C₂H₄(CF₂)₈F ,

wherein w represents an integer with a value of 1 to 300 and Me denotes a methyl group; by fluorohexylmethylsiloxane-dimethylsiloxane copolymers with general formula II(b),

II(b) Me₃SiO[F(CF₂)₄C₂H₄MeSiO]ₓ(Me₂SiO)_{y}SiMe₃ ,

wherein x and y are integers with values of at least 1, (x + y) has a value of 2 to 1,000, x/y is 0.1 to 0.9, and Me denotes the methyl group; and by cyclic fluorooctylmethylsiloxane- dimethylsiloxane copolymers corresponding to general formula II(c), 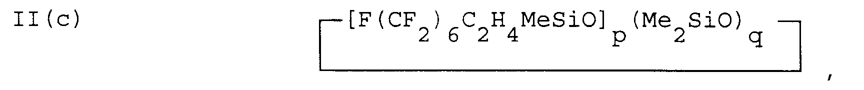
in which p and q are integers with values of at least 1, (p + q) has a value of 3 to 30, and Me denotes the methyl group.

Two methods for preparing ingredient C corresponding to formula II(a) are
(1) the hydrolysis of fluorodecyldimethylchlorosilane followed by polymerization of the resultant hydrolyzate with a cyclic dimethylsiloxane in the presence of a polymerization catalyst, and
(2) the cohydrolysis of fluorodecyldimethylchlorosilane and dimethyldichlorosilane followed by polymerization with a cyclic dimethylsiloxane in the presence of a polymerization catalyst.

Two methods for preparing ingredient C corresponding to formula II(b) are
(1) cohydrolysis of fluorohexylmethyldichlorosilane with dimethyldichlorosilane followed by re-equilibration copolymerization in the presence of hexamethyldisiloxane
   using a basic catalyst, and
(2) the separate hydrolysis of fluorohexylmethyldichlorosilane and dimethyldichlorosilane to produce alpha,omega-dihydroxypoly(fluorohexylmethylsiloxane) and alpha,omega-dihydroxypoly(dimethylsiloxane), respectively, followed first by a dehydration condensation polymerization of the alpha,omega-dihydroxypoly(fluorohexylmethylsiloxane) and alpha,omega-dihydroxypoly (dimethylsiloxane) and then by capping the two terminal silanol groups with the trimethylsiloxy group.

Two methods for preparing ingredient C corresponding to formula II(c) are :
(1) re-equilibration, in the presence of a basic catalyst, of the fluorooctylmethylsiloxanedimethylsiloxane copolymer produced by the cohydrolysis of fluorooctylmethyldichlorosilane and dimethyldichlorosilane,
   and
(2) the separate hydrolysis of fluorooctylmethyldichlorosilane and dimethyldichlorosilane to produce alpha,omega-dihydroxypoly(fluorooctylmethylsiloxane) and alpha,omega-dihydroxypoly(dimethylsiloxane), respectively, followed by dehydration condensation polymerization of the alpha,omega-dihydroxypoly(fluorooctylmethylsiloxan e) and alpha,omega-dihydroxypoly(dimethylsiloxane).

The concentration of ingredient C in the present compositions is from 0.01 to 40 weight parts per 100 weight parts of ingredient A, preferably from 0.1 to 20 weight parts. More than 40 weight parts of this ingredient results in a worsening of the physical properties of the cured materials prepared by using the present compositions. The incompatibility between ingredients A and B becomes apparent at concentrations below 0.01 weight parts.

The finely divided silica, ingredient D, of is a reinforcing filler whose purpose is to improve the mechanical strength of the cured composition. The silica has a specific surface area of at least 50 m2/g , preferably from 100 to 400 m2/g.

Any silica suitable as a reinforcing filler in silicone rubber compositions can be used as ingredient D. Useful silicas include dry-process silicas, such as fumed silica and calcined silica, and wet-process silicas such as precipitated silica. Also useful are the hydrophobicized silicas prepared by treating the surface of a wet- or dry-process silica with one or more of the organosilicon compounds used as silica treating agents. These organosilicon compounds include dimethyldichlorosilane, hexamethyldisilazane and diphenylsilanediol.

The concentration of ingredient D is typically from 1 to 100 weight parts per 100 weight parts of ingredient A, preferably from 5 to 70 weight parts.

The curing agent, ingredient E, is responsible for curing the compositions. Any curing agent that will cure both the organic and organosiloxane polymers referred to as ingredients A and B can be used for this purpose. For example, any curing agent that will cure silicone rubber compositions can be used as ingredient E.

Preferred curing agents are organoperoxides such as benzoyl peroxide, 2,4-dichlorobenzoyl peroxide, di-tert-butyl peroxide, tert-butylmonochlorobenzoyl peroxide, and 2,5-dimethyl-2,5-di(tert-butylperoxy)hexane. The concentration of ingredient E should be sufficient to initiate curing of the composition, and is typically from 0.1 to 20 weight parts per 100 weight parts of ingredient A.

In addition to ingredients A, B, C, D and E, the present compositions can also include additives that are typically used to modify the properties of fluorinated organic rubbers and silicone rubbers, so long as these additives do not adversely affect the processing of the present compositions or the properties of cured articles prepared by use of these compositions. Suitable additives include wetting agents, extending fillers, heat stabilizers, vulcanization assistants, softeners, plasticizers, antioxidants, and vulcanization accelerators.

Wetting agents increase the affinity between ingredients B and D, and are silanol-endblocked diorganopolysiloxanes with a low degree of polymerization.

Extending fillers include crushed quartz, diatomaceous earth, calcium carbonate, aluminosilicates, mica, talc, and aluminum oxide. The heat stabilizers are iron oxide, cerium oxide, cerium hydroxide, titanium oxide, aluminum oxide, zinc oxide, and manganese carbonate. The vulcanization assistants is triallyl isocyanurate.

The rubber compositions of this invention are prepared by mixing ingredients A to E to homogeneity or by combining any additives with these ingredients and mixing to homogeneity. For example, the rubber composition of the present invention can be prepared by introducing ingredients A to D into a kneader mixer, mixing for 3 to 20 minutes while heating, and then mixing in the curing agent, ingredient E, using a two-roll mill.

Means for blending the ingredients of the present compositions include kneader mixers, kneader mixers equipped with a ram cover, Banbury™ mixers, continuous mixing devices, two-roll mills, and three-roll mills.

The presence of the liquid fluorine-containing polyorganosiloxane (ingredient C) as a compatibilizing agent permits blending to homogeneity of the fluorinated organic rubber (ingredient A) and the diorganopolysiloxane gum (ingredient B). This suppresses the decline in physical properties caused by poor compatibility and yields cured rubber moldings with excellent physical properties. Moreover, the rubber moldings obtained by curing the present compositions exhibit the desirable properties of both the organic fluororubber and the diorganopolysiloxane gum. These properties include an excellent resistance to thermal degradation and the presence of solvents and oil.

The present curable compositions have excellent processability and moldability.

### Examples

The invention is explained in greater detail by means of the following working and comparative examples. Therein all parts are by weight, Me represents methyl radical, Vi represents vinyl radical, and cP represents centipoise. The reported viscosity values were measured at 25° C.

### Example 1

The following ingredients were placed in a kneader type mixer and blended to homogeneity:
40 parts of a vinylidene fluoride/hexafluoropropylene copolymer as the fluororubber, 44.4 parts of a dimethylvinylsiloxy-endblocked dimethylsiloxane-methylvinylsiloxane copolymer gum exhibiting an average degree of polymerization (DP) of 7,000 and containing 99.5 mole percent of dimethylsiloxane units and 0.5 mole percent of methylvinylsiloxane units,
1 part of a liquid fluorinated polyorganosiloxane oil with the formula

F(CF₂)₈C₂H₄Me₂SiO(Me₂SiO)ᵥSiMe₂C₂H₄(CF₂)₈F,

wherein the value of v is equivalent to a viscosity of 50 cP (0.05 Pa.s), 15 parts of a surface-hydrophobicized fume silica with a specific surface are of 200 m²/g, and
0.6 parts cerium oxide as a heat stabilizer.

100 parts of the resulting mixture and 0.5 parts 2,5-dimethyl-2,5-di(tert-butylperoxy)hexane were combined and blended to homogeneity on a two-roll mill to yield a curable organosiloxane composition of the present invention. This rubber composition was compression molded at a temperature of 170° C and under a pressure of 30 kgf/cm² for 10 minutes. A 2-mm-thick rubber sheet was produced which was heated in an oven for an additional 4 hours at 200° C to complete curing of the composition. The physical properties of hardness, tensile strength, elongation at break and tear strength exhibited by the cured rubber sheet were then measured using the test methods described in Japanese Industrial Standards (JIS) K 6301. The results are reported in Table 1.

The rubber sheet had a smooth, flat rupture surface, which confirmed that the various ingredients were well dispersed in the cured composition.

### Comparative Example 1

A curable rubber composition outside the scope of the present invention was prepared and cured using the ingredients and procedure described in Example 1, with the exception that the fluorosilicone oil was omitted. The compression molded sheet was 2-mm in thickness and was heated in an oven for an additional 4 hours at 200° C to complete the curing reaction. The durometer hardness, tensile strength, elongation at break and tear strength of the cured rubber sheet were then measured in accordance with JIS K 6301, and these results are reported in Table 1.

### Example 2

A curable composition of the present invention was prepared by blending the following ingredients to homogeneity:
80 parts of a fluororubber composed of a vinylidene fluoride-hexafluoropropylene copolymer, 14.8 parts of a dimethylvinylsiloxy-endblocked dimethylsiloxane/ methylvinylsiloxane copolymer gum exhibiting an average DP of 7,000 and containing 99.5 mole percent dimethylsiloxane units and 0.5 mole percent methylvinylsiloxane units, 0.7 parts of a fluorosilicone oil with a viscosity of 700 cP (mPa.s) and the formula

Me₃SiO[F(CF₂)₄C₂H₄MeSiO]_{c}(Me₂SiO)_{d}SiMe₃

wherein c/d = 1,
5 parts of a surface-hydrophobicized fumed silica with a specific surface area of 200 m²/g, and
0.2 parts cerium oxide as a heat stabilizer.

100 parts of the resultant mixture and 0.5 parts 2,5-dimethyl-2,5-di(tert-butylperoxy)hexane were combined and blended to homogeneity on a two-roll mill to yield a curable rubber composition. This composition was compression molded at 170° C under a pressure of 30 kgf/cm² for 10 minutes to yield a 2-mm-thick rubber sheet. It was then heated in an oven for an additional 4 hours at 200° C in order to complete the curing reaction.

The physical properties of hardness, tensile strength, elongation at break, tear strength exhibited by the cured rubber sheet were then measured in accordance with JIS K 6301. These results are reported in Table 1. In addition, the rubber sheet had a smooth, flat rupture surface, which confirmed that the various ingredients were well dispersed in the cured rubber composition.

### Example 3

A curable composition of the present invention was prepare by blending the following ingredients to homogeneity using a kneader type mixer:
100 parts of a dimethylvinylsiloxy-endblocked dimethylsiloxane/methylvinylsiloxane copolymer gum exhibiting an average DP of 7,000 and containing 99.7 mole percent of dimethylsiloxane units and 0.3 mole percent of methylvinylsiloxane units,
8 parts of a silanol-endblocked dimethylsiloxane with an average DP of 5, and 35 parts fumed silica with a specific surface are of 300 m²/g.

To the resultant mixture were added 50 parts of a vinylidene fluoride/tetrafluoroethylene/hexafluoropropylene terpolymer and 5 parts of a fluorosilicone oil with a number average molecular weight of 300,000 and the formula

Me₃SiO[F(CF₂)₈C₂H₄MeSiO]ₑ(Me₂SiO)_{f}SiMe₃ ,

wherein e/f = 0.25. The resultant mixture was blended to homogeneity for 1 hour. 100 parts of the resulting mixture and 0.5 parts 2,5-dimethyl-2,5-di(tert-butylperoxy)hexane were combined and blended to homogeneity on a two-roll mill to yield a curable rubber composition of the present invention. This rubber composition was compression molded for 10 minutes at 170° C under a pressure of 30 kgf/cm² to yield a 2-mm-thick rubber sheet. It was then heated in an oven for an additional 4 hours at 200°C in order complete the curing reaction.

The physical properties (hardness, tensile strength, elongation at break, tear strength) of this rubber sheet were then measured in accordance with JIS K 6301. These results are reported in Table 1. In addition, the rubber sheet had a smooth, flat rupture surface, which served to confirm that the various components were well dispersed in the cured rubber composition.

**Table 1**

| Comparison | Example 1 | Example 2 | Example 3 | Example 1 |
|---|---|---|---|---|
| hardness (JIS A) | 75 | 77 | 65 | 71 |
| tensile strength (kgf/cm²) | 120 | 110 | 110 | 82 |
| elongation (%) | 310 | 370 | 380 | 240 |
| tear strength (kgf/cm) | 24 | 22 | 20 | 19 |

## Claims

1. An elastomer composition comprising
(A) 100 weight parts of a fluorine-containing organic rubber,
(B) from 2 to 200 weight parts of a diorganopolysiloxane gum with the average formula
RₐSiO_{(4-a)/2}
wherein R is selected from substituted or unsubstituted monovalent hydrocarbon radicals and the value of a is from 1.980 to 2.001,
(C) from 0.01 to 40 weight parts of a fluorosilicone oil comprising at least one siloxane unit of the average formula
F(CF₂)_{b}CH₂CH₂MeₙSiO_{(3-n)/2}
wherein b is an integer with a value of at least 4; n is zero, 1, or 2; and Me represents a methyl radical,
(D) from 1 to 100 weight parts of a finely divided silica, and
(E) an amount of a curing agent from 0.1 to 20 wieght parts to cure said composition.

2. A composition according to claim 1 wherein the concentration of said gum is from 5 to 150 weight parts per 100 weight parts (A); said gum is selected from dimethylvinylsiloxy-endblocked dimethylpolysiloxane gums, dimethylvinylsiloxy-endblocked dimethylsiloxane-methylvinylsiloxane copolymer gums, trimethylsiloxy-endblocked dimethylsiloxane-methylvinylsiloxane copolymer gums, trimethylsiloxy-endblocked dimethylsiloxane- allylmethylsiloxane copolymer gums, and trimethylsiloxy- endblocked dimethylsiloxane-hexenylmethylsiloxane copolymer gums; the degree of polymerization of said gum is from 1000 to 20,000; the viscosity of said fluorosilicone oil at 25° C is from 0.01 to 10 Pa.s; the concentration of said oil is from 0.1 to 20 weight parts per 100 weight parts (A); the specific surface area of said silica is at least 50 m²/gram; the concentration of silica is from 5 to 70 weight parts per 100 weight (A); and said curing agent is an organoperoxide.

3. A composition according to claim 2 where said organic rubber is selected from vinylidene fluoride homopolymers, vinylidene fluoride-tetrafluoroethylene copolymers, vinylidene fluoride-hexafluoropropylene copolymers, vinylidene fluoride-tetrafluoroethylene-hexafluoropropylene terpolymers, tetrafluoroethylene-propylene copolymers, and tetrafluoroethylene-perfluoroalkyl vinyl ether copolymers; said fluorosilicone oil is selected from the group consisting of fluorodecyl-terminated dimethylpolysiloxanes represented by the general formula
F(CF₂)₈C₂H₄Me₂SiO(Me₂SiO)_{w}SiMe₂C₂H₄(CF₂)₈F
wherein w represents an integer with a value of 1 to 300 and Me represents methyl; fluorohexylmethylsiloxane-dimethylsiloxane copolymers represented by the general formula
Me₃SiO[F(CF₂)₄C₂H₄MeSiO]ₓ(Me₂SiO)_{y}SiMe₃
wherein x and y are integers with values of at least 1, (x + y) has a value of 2 to 1,000, x/y is 0.1 to 0.9, and Me is methyl; and cyclic fluorooctylmethylsiloxane-dimethylsiloxane copolymers corresponding to general formula 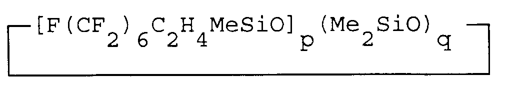 wherein p and q are integers with values of at least 1, (p + q) has a value of 3 to 30, and Me represents methyl; and said curing agent is selected from benzoyl peroxide, 2,4-dichlorobenzoyl peroxide, di-tert-butyl peroxide, tert-butylmonochlorobenzoyl peroxide, and 2,5-dimethyl-2,5- di(tert-butylperoxy)hexane.
